# FASCICULE DE BREVET EUROPEEN

(11) **EP 1 098 950 B1**
(45) Date de publication et mention de la délivrance du brevet: **19.02.2003**
(21) Numéro de dépôt: 99932920.4
(22) Date de dépôt: 20.07.1999
(51) Int. Cl.: C09K 7/06

(54) **PROCEDE D'UTILISATION DE BOUES DE FORAGE BIODEGRADABLES**
METHODE ZUR VERWENDUNG VON BIOLOGISCH ABBAUBAREN BOHRSCHLÄMMEN
METHOD FOR USING BIODEGRADABLE DRILLING FLUIDS

(30) Priorité: 21.07.1998 FR 9809263
(43) Date de publication de la demande: 16.05.2001
(73) Titulaire: Elf Exploration Production, 92400 Courbevoie (FR)
(72) Inventeur: DURRIEU, Josiane, F-64000 Pau (FR); ZURDO, Christian, F-64000 Pau (FR); RABION, Alain, F-64000 Pau (FR); FRAISSE, Laurent, F-64110 Saint Faust (FR); GUILLERME, Michel, F-64121 Serrescastet (FR)
(74) Mandataire: Cabinet Hirsch
(86) Numéro de dépôt international: FR9901773
(87) Numéro de publication internationale: WO00005324

(56) Documents cités:
- EP-A- 0 374 671
- EP-A- 0 386 636
- WO-A-95/21225
- WO-A-95/26386
- WO-A-98/50484
- US-A- 4 631 136

## Description

La présente invention vise un procédé d'utilisation de boues biodégradables au cours du forage d'un puits. Elle concerne plus particulièrement un procédé d'utilisation de plusieurs types de boues sur toute la longueur du puits.

Il est usuel d'utiliser une seule boue de forage sur toute la hauteur du puits, les propriétés spécifiques de cette boue étant liées à la température de forage en fond de puits et la nécessaire aptitude de la boue à refroidir, à lubrifier, à colmater la paroi des terrains traversés et à ramener les déblais en surface.

Pour atteindre des terrains dans lesquels en fond de puits les températures atteignent 200°C et plus, les boues de forage doivent garder intactes leurs caractéristiques physiques, c'est-à-dire leur aptitude à la lubrification, leur résistance à l'oxydation, leur portance pour ramener les déblais en surface, leur densité et leur activité en tant que réducteur de filtrat. Ces boues doivent contenir en outre des réserves basiques suffisantes pour neutraliser les espèces acides rencontrées au cours du forage et situé généralement dans des couches profondes, telles que le gaz carbonique ou le sulfure d'hydrogène. Or, lorsqu'on atteint les terrains contenant ces espèces acides et atteignant ces températures supérieures à 100°C environ, 70 % du volume de la boue nécessaire au forage a été utilisé, puisque plus on avance profondément dans le sol plus le diamètre du puits diminue. Cela fait 70% en volume de boue mal employée, puisque dans cette première partie du puits correspondant au forage dit de surface, les caractéristiques requises peuvent être moins pointues que celles requises en fond de puits. Notamment, les températures de forage étant faibles (inférieures à 100°C), le fluide de forage subit peu de transformation de type oxydation, hydrolyse voire décomposition.

Il s'agit donc d'adapter la boue au terrain traversé, ce qui a un impact direct sur les caractéristiques techniques, physiques et chimiques des boues choisies, et l'ordre d'utilisation de celles-ci, la conséquence étant économique, puisque le coût à l'achat des boues de forage pourra être moindre.

A ce premier problème s'ajoutent les problèmes de traitement des déblais en surface, de récupération par tamisage de la boue en vue de la recycler et de stockage des déblais. Ces problèmes étant déjà délicats à terre, ils deviennent beaucoup plus difficiles près des plates-formes en mer, car les contraintes en matière de réglementation de l'environnement sont beaucoup plus strictes. Economiquement, il est plus raisonnable de rejeter ces déblais en mer plutôt que de les transporter à terre pour traitement d'autant plus qu'en forage de surface, les volumes de déblais sont les plus importants, de 60 à 80% du volume total des déblais rejetés du puits. Le rejet en mer des déblais ne peut donc dépendre que de la toxicité de la boue utilisée ou de sa biodégradabilité dans le milieu marin.

Parmi les boues actuellement utilisées , on trouve les boues à l'eau, les boues à huile et les boues dites de substitution.

Les boues à l'huile comprennent une base huile formée par le pétrole brut ou une coupe hydrocarbonée, dans laquelle sont ajoutés un certain nombre d'additifs permettant d'améliorer leurs propriétés rhéologiques, leurs pouvoirs réducteurs de filtrat et leur basicité. On peut citer les huiles de type "Diesel" ou les huiles minérales à teneur en composés aromatiques faible.

Ainsi, le brevet US 4.481.121 propose des boues à l'huile contenant de 75 à 95 % en volume de gazole ou d'une huile végétale notamment extraite de la résine de pin ou "tall oil", des paraffines de point de fusion compris entre 76 et 120°C et de 5 à 25% en volume d'une réserve basique constituée de diéthanolamide et d'hydroxydes alcalins.

Cependant de telles boues sont très toxiques vis-à-vis de l'environnement et sont très lentement biodégradables en milieux aérobie et anaérobie. Une telle pollution peut poser un problème majeur si on est obligé de traverser une nappe phréatique. Certaines législations nationales ont d'ores et déjà interdit l'utilisation de ces boues ou le rejet en mer de déblais de forage imprégnés par elles.

Les boues à l'eau utilisant des compositions aqueuses obtenues à partir de polymères , de polyols ou de polyglycérols, bien que moins polluantes et biodégradables, sont peu utilisées du fait de leur peu de stabilité au-delà de 100°C, de leurs propriétés lubrifiantes insuffisantes dans les forages déviés et de la présence d'eau dans les terrains argileux.

Les boues de substitution sont utilisées surtout en remplacement des boues à l'huile souvent fortement aromatiques. Elles sont formulées à partir de produits de synthèse hydrocarbonés non toxiques et non aromatiques.

Un premier type de boues de substitution est obtenu à partir d'oléfines linéaires ou ramifiées, ou de poly-α-oléfines dont les performances sont proches des boues à l'huile, c'est-à-dire maintien des propriétés rhéologiques et lubrifiantes à haute température, maintien de la bonne résistance à l'oxydation et maintien de leur caractère non toxique. Elles sont lentement biodégradables en milieu aérobie et très peu biodégradables en milieu anaérobie. (J. Steber et al, offshore, septembre 1994). Ce problème est d'autant plus critique lorsque des forages sont effectués en mer dans laquelle il est usuel de rejeter les déblais imprégnés de boue. Les déblais s'accumulent en piles, sous l'eau, à proximité de la plate-forme, dans lesquelles on observe une accumulation de composés chimiques non biodégradables. En effet, à l'intérieur de ces piles, le milieu étant anaérobie il n'y a pas de biodégradation possible de ces composés tandis qu'à la surface des piles, le milieu étant aérobie, il y a une dégradation lente de ces composés. C'est pourquoi certaines législations prévoient de limiter très fortement voire même d'interdire le rejet de ces déblais en mer puisque relativement peu biodégradables.

Les boues actuellement préférées sont constituées de produits hydrocarbonés facilement biodégradables, parmi lesquels les esters synthétiques tels que décrits dans les brevets US 4.374.737 et US 5.232.910. Ces boues, très élaborées, sont chères puisqu'elles ont été conçues pour répondre à toutes les conditions de forage, y compris les forages en conditions extrêmes telles que résister à une température supérieure à 200°C, à l'oxydation et aux milieux acides.

Parallèlement à ces boues, on trouve des émulsions inverses moins polluantes car considérées comme facilement biodégradables telles que celles décrites dans la demande. Ces émulsions inverses sont constituées d'huiles végétales raffinées de forte viscosité en mélange avec des diluants appropriés permettant d'abaisser leur WO 95/26 386 viscosité. Ces boues basées sur des émulsions inverses sont utilisables quelle que soit la température sur toute la hauteur du puits. Elles sont moins toxiques et plus biodégradables que les précédentes mais d'un prix de revient très élevé puisqu'elles sont parfaitement raffinées et mélangées avec un diluant souvent coûteux à l'achat et divers additifs, notamment des antioxydants, indispensables pour une bonne tenue de l'émulsion à des températures de forage élevées.

Le brevet US 4 631 136 concerne des émulsions inverses huile/eau biodégradables à base d'huiles naturelles et contenant également, entre autres, des émulsifiants et des agents de mouillage, qui sont des produits généralement similaires aux huiles. Plus particulièrement ces émulsifiants et agents de mouillage consistent en esters de l'acide oléique et de sorbitol polyoxyéthylénés ou non tels que les monooléates de sorbitol polyoxyéthylénés ou non, les trioléates de sorbitol polyoxyéthylénés et les hexaoléates de sobitol polyoxyéthylénés.

Le but de la présente invention est de diminuer simultanément les risques de pollution tout en diminuant sensiblement les coûts de revient de l'opération de forage en ce qui concerne le coût total de la boue utilisée. Elle vise également à diminuer voire annuler le coût de traitement des déblais imprégnés, puisque contenant une boue moins toxique, rapidement biodégradable, ces déblais peuvent être rejetés tels quels dans la mer ou stockés à terre.

La présente invention a pour objet un procédé d'utilisation de boues biodégradables de forage caractérisé en ce que dès le début du forage, on introduit dans le puits une boue de surface biodégradable stable jusqu'à environ 100°C, de pouvoir réducteur de filtrat réglable de 2 à 13 cm3 selon la quantité d'agent réducteur de filtrat utilisée, et de stabilité électrique supérieure ou égale à 1000 Volts, et que lorsque la température du terrain traversé atteint 100°C, on remplace la dite boue de surface par une boue dite de fond stable jusqu'à des températures supérieures à 200°C, le volume de la dite boue de surface représentant de 60 à 80% en volume du volume total de boue utilisée.

Par boue de surface, on entend la boue pouvant être utilisée dés le début du forage, et par boue de fond, la ou les boues utilisées dans la partie du puits où la spécificité du terrain requiert des caractéristiques de résistance chimique et physique particulière comme la résistance en température ou la neutralisation des espèces acides rencontrées.

Dans ce procédé selon l'invention, contrairement aux procédés de forage classiques au cours desquels un seul type de boue est utilisé, on utilise plusieurs boues, au moins deux, adaptées à toutes les séries de terrains traversés, pour une optimisation du prix de revient du forage et du traitement des déblais, et une limitation de la pollution. Dans ce procédé selon l'invention, la première boue dite boue de surface, est choisie pour être très facilement biodégradée. La température de changement de boue est fixée à 100°C afin de donner un ordre de grandeur mais celle-ci peut être choisie faiblement supérieure ou inférieure selon le plan de progression du tubage du puits. Cependant, 100°C correspond aussi à la température à laquelle la première boue ou boue de surface devient instable et se décompose progressivement au cours du temps.

La boue de surface est très rapidement biodégradable, peu polluante pour les terrains traversés et pour le milieu marin. Elle peut être choisie parmi les boues à l'eau disponibles sur le marché et les émulsions inverses biodégradables, ces dernières étant préférées.

La boue de surface selon l'invention est constituée d'une émulsion inverse dont le rapport volumique Huile/eau varie de 95/5 à 70/30.

La phase huile est constituée d'une huile dite écocompatible, de faible viscosité et très biodégradable er. milieux aérobie et anaérobie. L'avantage majeur de ces huiles écocompatibles réside dans la simplification du traitement des déblais de forage imprégnés par cette phase huile. Si ces déblais, voire l'huile écocompatible ou la boue de forage elle-même, sont déchargés en mer, il n'en résulte aucune pollution.

La phase huile contient une partie majeure d'huiles naturelles végétales ou animales non raffinées et une partie mineure d'un diluant constitué d'esters de ces huiles naturelles. Ces huiles d'origine animale ou végétale n'étant pas raffinées, contiennent 90 % en poids, et de préférence plus de 95% en poids de triglycérides. Elles sont choisies de préférence dans le groupe constitué par l'huile de tournesol, l'huile de copra, l'huile de soja, l'huile de colza, l'huile de ricin, l'huile de palme, l'huile palmitiste, l'huile d'arachide, l'huile de lin, l'huile d'olive, l'huile de maïs, l'huile de babassu, l'huile de coco et l'huile de suif.

Ces huiles selon l'invention sont constituées de triglycérides correspondant à des triesters de glycérol de formule générale (I) ci-après : 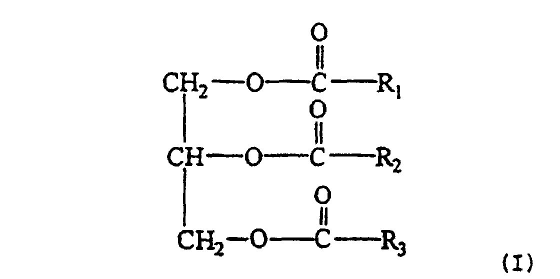 dans laquelle R₁, R₂, et R₃ , identiques ou différents, sont des restes choisis parmi les groupements Rᵢ aliphatiques linéaires, saturés ou insaturés, constitués de 5 à 23 atomes de carbone. Ces groupements provenant d'acides gras aliphatiques peuvent contenir de une à trois liaisons oléfiniques.

Que l'huile soit d'origine animale ou végétale, ce sont les restes d'acide gras Rᵢ qui confèrent aux triglycérides leurs propriétés.

Selon un mode préféré de l'invention, dans les triglycérides de formule (I) constituant l'huile, plus de 60%, et de préférence plus de 80% des restes R₁, R₂ ou R₃ sont des groupements Rᵢ saturés ou monoinsaturés.

Parmi les triglycérides de formule (I) contenant des groupements Rᵢ monoinsaturés, on préfère l'huile de ricin.

Selon l'invention, dans les triglycérides de formule (I), au moins 60% des groupements Rᵢ sont issus d'acide oléique et de préférence plus de 77% des Rᵢ sont issus d'acide oléique. Des huiles à forte teneur en acide oléique, comme par exemple l'huile de tournesol oléique, possèdent une excellente résistance à l'oxydation à des températures élevées ce qui permet de diminuer les quantités d'antioxydants et par conséquent le prix de revient de la boue de forage.

Les huiles végétales oléiques préférées sont l'huile de colza oléique et l'huile de tournesol oléique.

Ces huiles végétales réputées peu stables, pour un forage de fond, sont suffisamment stables dans les conditions de mise en oeuvre d'un forage de surface, c'est-à-dire environ 100°C pendant un temps suffisamment court, et sans réserve alcaline favorisant l'hydrolyse des triglycérides qui les composent.

Dans la phase huileuse selon l'invention, le diluant n'a pas seulement pour fonction d'abaisser la viscosité de l'huile animale ou végétale mais aussi d'améliorer les propriétés lubrifiantes et la stabilité de l'émulsion résultante qui compose la boue de surface.

Comme il n'y a pas ou peu de possibilités d'hydrolyse de la fonction ester dans les conditions de mise en oeuvre de la boue de surface, ces diluants peuvent être choisis parmi les esters synthétiques d'acides carboxyliques aliphatiques saturés ou insacurés, linéaires ou ramifiés comprenant de 6 à 24 atomes de carbone par chaîne et d'alcanols comprenant de 1 à 4 atomes de carbone par chaîne.

Ces esters sont synthétisés par estérification au moyen d'un alcanol comprenant de 1 à 4 atomes de carbone par chaîne, des acides carboxyliques obtenus par hydrolyse de triglycérides d'huiles animales ou végétales naturelles. Il est également possible de synthétiser ces esters par transestérification directe des triglycérides naturels au moyen d'un alcanol.

Pour préparer les esters constituant le diluant selon l'invention, on peut choisir comme matière première une huile animale ou végétale ou encore des coupes hydrocarbonées riches en triglycérides de formule (I) contenant plus de 60%, et de préférence plus de 80% de restes R₁, R₂ ou R₃ saturés ou monoinsaturés.

Dans un mode préféré de l'invention, les esters synthétiques constituant le diluant de l'invention sont formés à partir d'huiles végétales ou animales du groupe constitué par l'huile de tournesol, l'huile de copra, l'huile de soja, l'huile de colza, l'huile de ricin, l'huile de palme, l'huile palmitiste, l'huile d'arachide, l'huile de lin, l'huile d'olive, l'huile de maïs, l'huile de babassu, l'huile de coco et l'huile de suif.

Pour estérifier, on utilise de préférence un alcanol choisi dans le groupe constitué par l'isopropanol, l'éthanol, le propanol, le butanol et le méthanol.

Dans un mode préféré de l'invention, le diluant est synthétisé à partir d'huiles choisies parmi l'huile de colza, l'huile de copra, l'huile de tournesol, l'huile de ricin et d'isopropanol.

Dans la deuxième partie du forage, on utilise des boues de fond choisies parmi les émulsions inverses obtenues avec des huiles minérales ou organiques stables jusqu'à 250°C et plus, et les boues non toxiques dont les déblais peuvent être ramenés et stockés à terre du fait de leur faible volume. Par huiles minérales et organiques, on entend les oléfines linéaires alkylées, les mono-α-oléfines (MAO), les poly-α-oléfines (PAO), les paraffines, les esters, les acétals et les alkylbenzènes linéaires (LAB).

Un autre objet de l'invention est une boue de surface stable jusqu'à environ 100°C constituée de 5 à 30 % en volume d'eau et de 95 à 70% en volume d'une phase huile contenant une majeure partie d'huiles naturelles, végétales ou animales non raffinées, ladite bone se caractérisant en ce que la phase huile renferme également une partie mineure d'un diluant choisi parmi les esters synthétiques d'acides carboxyliques aliphatiques saturés ou insaturés, linéaires ou ramifiés, comprenant de 6 à 24 atomes par chaîne et d'alcanols renfermant de 1 à 4 atomes de carbone par chaîne.

Dans la suite de la présente description, des exemples sont donnés pour illustrer l'invention sans en limiter la portée.

### EXEMPLE I

Le présent exemple vise à montrer les propriétés lubrifiantes des boues selon l'invention lorsqu'elles sont utilisées entre 20 et 100°C.

Plusieurs échantillons ont été préparés contenant les compositions telles que décrites dans le tableau I ci-après.

**TABLEAU I**

| Echantillon | Composition | | |
|---|---|---|---|
| | huile | diluant | eau |
| E₁ | tournesol oléique (100%) | 0% | 0% |
| E₂ | tournesol oléique (75%) | 2-ethylhexyl-acétate (25%) | 0% |
| X₁ | tournesol oléique (75%) | 2-oléate d'isopropyle (25%) | 0% |
| EMU₁ | tournesol oléique (67,5%) | 2-oléate d'isopropyle (22,5%) | 10% |
| EMU₂ | tournesol oléique (67,5%) | 2-ethylhexyl-acétate (22,5%) | 10% |

Ces échantillons ont été testés sur une machine extrême pression, dérivée de la méthode FORD EUBJI 1A. Chaque essai consiste à faire tourner un cylindre à 290 tours/mn entre deux mors qui l'enserrent, et à mesurer simultanément le couple de frottement à chaque palier de 888 Newtons. L'échantillon est introduit sur l'axe d'usure avec un débit de 10ml/mn. Chaque palier est maintenu pendant une minute. On retient comme caractéristique de lubrification la valeur du palier avant grippage.

Les valeurs mesurées pour chacun des échantillons du tableau I sont données dans le tableau II ci-après.

**TABLEAU II**

| Echantillon | Palier de grippage (Newtons) | Couple de frottement avant grippage (N.cm) |
|---|---|---|
| E₁ | 7992 | 285 |
| E₂ | 6216 | 230 |
| X₁ | 6216 | 227 |
| EMU₁ | 13320(vibration, usure) | 710 |
| EMU₂ | 9768 | 475 |

Les résultats obtenus avec les échantillons X₁ et E₂ sont de même nature compte tenu de la reproductibilité des mesures. En effet, dans les conditions d'extrêmes pressions dans lesquelles on opère, il est difficile de différencier les propriétés des deux diluants. On observe principalement une diminution de la viscosité comparée à celle de l'huile végétale elle-même, correspondant à l'effet du diluant.

L'émulsion EMU₁ montre de bien meilleures propriétés lubrifiantes que l'émulsion EMU₂ puisque pour une contrainte de 13320 Newtons, limite des possibilités de la machine extrême pression il n'y a toujours pas constat de grippage. Ce résultat est du à la nature même du diluant selon l'invention.

On obtient une meilleure stabilité de l'émulsion ainsi que de meilleures propriétés lubrifiantes.

### EXEMPLE II

Le présent exemple vise à décrire les propriétés rhéologiques et de pouvoir réducteur de filtrat des boues selon l'invention avant et après vieillissement montrant que ces boues sont parfaitement adaptables au forage de surface entre l'ambiante et 100°C.

Trois échantillons de boue B₁, B₂ et B₃ ont été préparés : leur composition est décrite dans le tableau I ci-après.

**TABLEAU I**

| Composition | B₁ | B₂ | B₃ |
|---|---|---|---|
| Huile de base | 624ml (tournesol) | 415,9ml (tournesol) | 512ml (tournesol oléique) |
| diluant | 69,2 ml (ester méthylique C8-C10) | 277,2ml (ester méthylique C8-C10) | 170,7ml (ester isopropylique C16-C18) |
| Rapport (vol) Huile/Diluant | 90/10 | 60/40 | 75/25 |
| Rapport (vol) Huile/eau | 90/10 | 80/20 | 80/20 |
| émulsifiant | 8,6 ml | 17,2 ml | 25 ml (1) |
| épaississant | 22,3g (bentone) | 22,3g (bentone) | 20g (hectorite organophile) |
| agent mouillant | 2,9 ml | 2,9 ml | 3 ml |
| Réducteur de filtrat | 15 g | 15g | 0g |
| eau | 73,4 ml | 76,5 ml | 173,7 ml |
| CaCl2 | 28,6 g | 29,8 g | 78,8 g |
| Chaux | 2,3 g | 2,3g | 3 |
| Baryte | 343,5g | 294g | 343,5g |

Les caractéristiques rhéologiques au FANN 35 de ces boues selon l'invention sont données dans le tableau II ci-après avant vieillissement pour B₁ et B₃ (sans chaux), et après vieillissement de B₁, B₂ et B₃ (avec chaux) à 80°C pendant 16 heures.

**TABLEAU II**

| FANN 35 Tour/minute | B₁ | | B₂ | B₃ | |
|---|---|---|---|---|---|
| | avant | après | | avec chaux | sans chaux |
| 600 | 148 | 158 | 152 | 132 | 151 |
| 300 | 84 | 95 | 98 | 77 | 95 |
| 200 | 60 | 70 | 77 | 57 | 72 |
| 100 | 36 | 45 | 53 | 36 | 49 |
| 60 | 27 | 34 | 42 | 26 | 39 |
| 30 | 20 | 26 | 33 | 19 | 30 |
| 6 | 13 | 17 | 23 | 12 | 20 |
| 3 | 12 | 16 | 21 | 11 | 18 |
| VA(mPa.s) | 74 | 79 | 76 | 66 | 75,5 |
| VP(mPa.s) | 64 | 63 | 54 | 55 | 56 |

On constate que l'huile végétale introduite dans un diluant approprié conduit à une boue de forage de très bonne stabilité, présentant une bonne tenue en température.

## Revendications

1. Procédé d'utilisation de boues biodégradables de forage, **caractérisé en ce que** dès le début du forage, on introduit dans le puits une boue de surface biodégradable stable jusqu'à 100°C, de pouvoir réducteur de filtrat réglable de 2 à 13 cm³ et de stabilité électrique supérieure ou égale à 1000 Volts, et que lorsque la température du terrain traversé atteint 100°C, on remplace ladite boue de surface par une boue de fond stable à des températures supérieures à 200°C, le volume de la boue de surface représentant de 60 à 80 % en volume du volume total de boue utilisée.

2. Procédé selon la revendication 1, **caractérisé en ce que** la boue de surface biodégradable est choisie parmi les boues à l'eau et les émulsions inverses biodégradables.

3. Procédé selon la revendication 1 ou 2, **caractérisé en ce que** la boue de surface est une émulsion inverse dont le rapport volumique Huile/eau varie de 95/5 à 70/30, la phase huile contenant une majeure partie d'huiles naturelles végétales ou animales non raffinées et une partie mineure d'un diluant constitué d'esters de ces huiles naturelles.

4. Procédé selon la revendication 3, **caractérisé en ce que** lesdites huiles naturelles sont choisies dans le groupe constitué par l'huile de tournesol, l'huile de copra, l'huile de soja, l'huile de colza, l'huile de ricin, l'huile de palme, l'huile palmitiste, l'huile d'arachide, l'huile de lin, l'huile d'olive, l'huile de maïs, l'huile de babassu, l'huile de coco et l'huile de suif.

5. Procédé selon la revendication 3 ou 4, **caractérisé en ce que** ces huiles naturelles sont constituées de triglycérides correspondant à des triesters de glycérol de formule générale (I) ci-après : 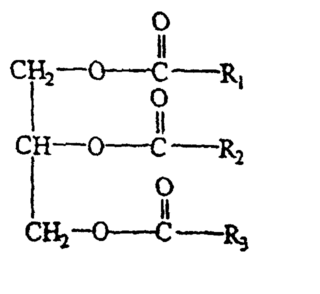 dans laquelle R₁, R₂ et R₃, identiques ou différents, sont des restes choisis parmi les groupements Rᵢ aliphatiques linéaires, saturés ou comprenant jusqu'à trois liaisons oléfiniques et constitués de 5 à 23 atomes de carbone.

6. Procédé selon la revendication 5, **caractérisé en ce que** dans les trigiycérides de formule (I), plus de 60 % des restes R₁, R₂ ou R₃ sont des groupements Rᵢ saturés ou monoinsaturés.

7. Procédé selon les revendications 5 ou 6, **caractérisé en ce que** l'huile naturelle consiste en huile de ricin, laquelle huile est constituée de triglycérides de formule (I) dont les groupements Rᵢ sont monoinsaturés.

8. Procédé selon les revendications 5 ou 6, **caractérisé en ce que** dans les triglycérides de formule (I), au moins 60 % des groupements Rᵢ sont issus d'acide oléique.

9. Procédé selon les revendications 3 à 7, **caractérisé en ce que** les huiles végétales sont l'huile de colza oléique et l'huile de tournesol oléique.

10. Procédé selon l'une des revendications 3 à 8, **caractérisé en ce que** le diluant est choisi parmi les esters synthétiques d'acides carboxyliques aliphatiques saturés ou insaturés, linéaires ou ramifiés comprenant de 6 à 24 atomes de carbone par chaîne et d'alcanols comprenant de 1 à 4 atomes de carbone par chaîne.

11. Procédé selon la revendication 10, **caractérisé en ce que** les esters sont synthétisés par estérification au moyen d'un alcanol comprenant de 1 à 4 atomes de carbone par chaîne, des acides carboxyliques obtenus par hydrolyse de triglycérides d'huiles animales ou végétales naturelles ou par transestérification directe desdits triglycérides.

12. Procédé selon la revendication 11, **caractérisé en ce que** les huiles choisies comme matière première pour la synthèse des esters sont des huiles animales ou végétales ou encore des coupes hydrocarbonées riches en triglycérides de formule correspondant à la formule (I) de la revendication 5 et contenant plus de 60 % de restes R₁, R₂ ou R₃, saturés ou monoinsaturés.

13. Procédé selon les revendications 11 ou 12, **caractérisé en ce que** les esters synthétiques sont formés à partir d'huiles végétales ou animales du groupe constitué par l'huile de tournesol, l'huile de copra, l'huile de soja, l'huile de colza, l'huile de ricin, l'huile de palme, l'huile palmitiste, l'huile d'arachide, l'huile de lin, l'huile d'olive, l'huile de maïs, l'huile de babassu, l'huile de coco et l'huile de suif.

14. Procédé selon l'une des revendications de 10 à 13, **caractérisé en ce que** les alcanols sont choisis dans le groupe constitué par l'éthanol, le propanol, le butanol, le méthanol et l'isopropanol.

15. Procédé selon la revendication 11, **caractérisé en ce que** le diluant est synthétisé à partir d'huiles choisies parmi l'huile de colza, l'huile de copra, l'huile de tournesol, l'huile de ricin et de l'alcanol consistant en isopropanol.

16. Procédé selon l'une des revendications de 1 à 15 **caractérisé en ce que** la boue de fond est choisie parmi les émulsions inverses obtenues avec des huiles minérales et organiques stables jusqu'à 250°C et plus, et les boues non toxiques dont les déblais peuvent être ramenés et stockés à terre du fait de leur faible volume.

17. Procédé selon la revendication 3, **caractérisé en ce que** lesdites huiles naturelles contiennent plus de 95 % en poids de triglycérides.

18. Procédé selon la revendication 5, **caractérisé en ce que** dans les triglycérides de formule (I), plus de 80 % des restes R₁, R₂ ou R₃ sont des groupements R; saturés ou monoinsaturés.

19. Procédé selon la revendication 8, **caractérisé en ce que** dans les triglycérides de formule (I), plus de 77 % des groupements Rᵢ sont issus d'acide oléique.

20. Procédé selon la revendication 12, **caractérisé en ce que** les triglycérides de formule (I) présents dans les huiles choisies pour la synthèse des esters contiennent plus de 80 % de restes R₁, R₂ ou R₃ saturés ou monoinsaturés.

21. Boue de surface, utilisable dans la première étape du procédé selon les revendications 1 à 3, constituée de 5 à 30 % en volume d'eau et de 95 à 70 % en volume d'une phase huile contenant une majeure partie d'huiles naturelles, végétales ou animales non raffinées, et **caractérisée en ce que** la phase huile renferme également une partie mineure d'un diluant choisi parmi les esters synthétiques d'acides carboxyliques aliphatiques saturés ou insaturés, linéaires ou ramifiés, comprenant de 6 à 24 atomes de carbone par chaîne et d'alcanols renfermant de 1 à 4 atomes de carbone par chaîne.

22. Boue de surface selon la revendication 21, **caractérisée en ce que** lesdits esters sont synthétisés par estérification, au moyen d'un alcanol comprenant de 1 à 4 atomes de carbone par chaîne, des acides carboxyliques résultant de l'hydrolyse de triglycérides d'huiles animales ou végétales naturelles ou par transestérification directe desdits triglycérides au moyen d'un tel alcanol.

## Claims

1. Process for using biodegradable drilling muds, **characterized in that** a biodegradable surface sludge which is stable up to 100°C, which has filtrate-reducing power which is adjustable from 2 to 13 cm³ and which has an electrical stability of greater than or equal to 1000 volts, is introduced into the well at the start of drilling, and **in that**, when the temperature of the terrain passed through reaches 100°C, the said surface sludge is replaced with a bottom sludge which is stable at temperatures above 200°C, the volume of the surface sludge representing from 60 to 80% by volume relative to the total volume of sludge used.

2. Process according to Claim 1, **characterized in that** the biodegradable surface sludge is chosen from biodegradable water-based muds and reverse emulsions.

3. Process according to either of Claims 1 and 2, **characterized in that** the surface sludge is a reverse emulsion in which the oil/water ratio by volume ranges from 95/5 to 70/30, the oil phase containing a majority of unrefined plant or animal natural oils and a minority of a diluent consisting of esters of these natural oils.

4. Process according to Claim 3, **characterized in that** the natural oils chosen from the group consisting of sunflower oil, copra oil, soybean oil, rapeseed oil, castor oil, palm oil, palm kernel oil, groundnut oil, linseed oil, olive oil, corn oil, babassu oil, coconut oil and tallow oil.

5. Process according to Claim 3 or 4, **characterized in that** these natural oils consist of triglycerides corresponding to glycerol triesters of general formula I below: 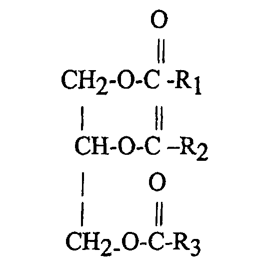 in which R1,R2 and R3, which may be indentical or different, are chosen from linear aliphatic Rᵢ groups which are saturated or which comprise up to three olefinic bonds and consist of 5 to 23 carbon atoms.

6. Process according to claim 5, **characterized in that** in the triglycerides of formula (I), more than 60% of the radicals R1, R2 or R3. saturated or monounsaturated Rᵢ groups.

7. Process according to claims 5 or 6, **characterized in that** the natural oil consists of castor oil, said oil being constituted of triglycerides of formula (I) the Ri groups of which are monosaturated.

8. Process according to claims 5 or 6, **characterized in that**, in the triglycerides of formula (I) , at least 60% of the Ri groups are derived from oleic acid.

9. Process according to claims 3 to 8, **characterized in that** the preferred plant oils are oleic rapessed oil and oleic sunflower oil.

10. Process according to one of claims 3 to 8, **characterized in that** the diluent is chosen from synthetic esters of linear or branched, saturated or unsaturated aliphatic carboxylic acids comprising from 6 to 24 carbon atoms per chain, and of alkanols comprising from 1 to 4 carbon atoms per chain.

11. Process according to claim 10, **characterized in that** the esters are synthesized by esterification, using an alkanol comprising from 1 to 4 carbon atoms per chain, of carboxylic acids obtained by hydrolysis of triglycerides from natural animal or plant oils, or by direct transesterification of said triglyerides.

12. Process according to Claim 11, **characterized in that** the oils chosen as starting material are chosen from animal or plant oils or alternatively from hydrocarbon-based fractions rich in triglycerides of formula (I) in claim 5, containing more than 60% of saturated or monounsaturated radicals R₁, R₂ or R₃.

13. Process according to Claim 11 or 12, **characterized in that** the synthetic esters are formed from plant or animal oils from the group consisting of sunflower oil, copra oil, soybean oil, rapeseed oil, castor oil, palm oil, palm kernel oil, groundnut oil,

14. Process according to one of Claims 10 to 13, **characterized in that** the alkanols are chosen from the group consisting of ethanol, propanol, butanol, methanol and isopropanol.

15. Process according to Claim 11, **characterized in that** the diluent is synthesized from oils chosen from rapeseed oil, copra oil, sunflower oil and castor oil and from an alkanol consisting of isopropanol.

16. Process according to one of Claims 1 to 15, **characterized in that** the bottom sludge is chosen from mineral and organic oils which are stable up to 250⁰C and above, and non-toxic muds whose cuttings can be returned and stored onshore on account of their low volume.

17. Process according to Claim 3, **characterized in that** said natural oils contain more than 95% by weight of triglycerides.

18. Process according to Claim 5, **characterized in that** in the triglycerides of formula (I), more than 80% of the R₁, R₂ or R₃ radicals are saturated or monounsaturated Rᵢ groups.

19. Process according to Claim 8, **characterized in that** in the triglycerides of formula (I), more than 77% of the Rᵢ groups are derived from oleic acid.

20. Process according to Claim 12, **characterized in that** the triglycerides of formula (I) have in the oils chosen for the synthesis, esters containing more than 80% of saturated or monounsaturated radicals R₁, R₂ or R₃

21. Surface sludge used in the first step of the process according to Claims 1 to 3, consisting of from 5 to 30% by volume of water and from 95 to 70% by volume of an oil phase containing a majority of unrefined plant or animal natural oils and **characterized in that** the oil phase also includes a minor portion of a diluent chosen from synthetic esters of linear or branched, saturated or unsaturated aliphatic carboxylic acids comprising from 6 to 24 carbon atoms per chain and of alkanols comprising from 1 to 4 carbon atoms per chain.

22. Surface sludge according to Claim 21, **characterized in that** the said esters are synthesized by esterification, using an alkanol comprising from 1 to 4 carbon atoms per chain, of carboxylic acids obtained by hydrolysis of triglycerides from natural animal or plant oils. It is also possible to synthesize these esters by direct transesterification of the natural triglycerides using an alkanol

## Patentansprüche

1. Verfahren zur Verwendung biologisch abbaubarer Bohrschlämme, **dadurch gekennzeichnet, daß** man von Beginn der Bohrung an in das Bohrloch einen bis 100°C stabilen, biologisch abbaubaren Oberflächen-Schlamm mit einem Filtrat-Reduktionsvermögen, das von 2 bis 13 cm³ einstellbar ist, und mit einer elektrischen Stabilität über oder gleich 1000 Volt einbringt, und daß man, wenn die Temperatur des durchdrungenen Erdreichs 100°C erreicht, den Oberflächen-Schlamm durch einen Grund-Schlamm, der bis Temperaturen über 200°C stabil ist, ersetzt, wobei das Volumen des Oberflächen-Schlamms 60 bis 80 Vol.-% des Gesamtvolumens des verwendeten Schlamms ausmacht.

2. Verfahren nach Anspruch 1, **dadurch gekennzeichnet, daß** der biologisch abbaubare Oberflächen-Schlamm unter den wäßrigen Schlämmen und den inversen Emulsionen, die biologisch abbaubar sind, ausgewählt wird.

3. Verfahren nach Anspruch 1 oder 2, **dadurch gekennzeichnet, daß** der Oberflächen-Schlamm eine inverse Emulsion ist, deren Volumenverhältnis Öl/Wasser von 95/5 bis 70/30 variiert, wobei die Ölphase einen Großteil pflanzliche oder tierische, nicht raffinierte, natürliche Öle und einen kleineren Teil eines Verdünnungsmittels, das aus Estern dieser natürlichen Öle besteht, enthält.

4. Verfahren nach Anspruch 3, **dadurch gekennzeichnet, daß** die natürlichen Öle ausgewählt werden aus der Gruppe, die besteht aus Sonnenblumenöl, Kopraöl, Sojaöl, Colzaöl, Rizinusöl, Palmöl, Palmkernöl, Erdnußöl, Leinöl, Olivenöl, Maisöl, Babassuöl, Kokosöl und Talköl.

5. Verfahren nach Anspruch 3 oder 4, **dadurch gekennzeichnet, daß** diese natürlichen Öle aus Triglyceriden bestehen, die Triestern von Glycerin der nachfolgenden allgemeinen Formel (I) entsprechen: 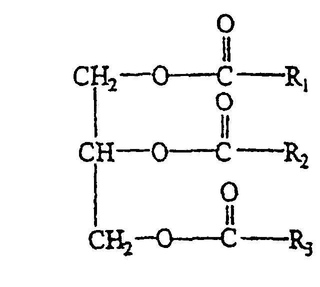 in der R₁, R₂ und R₃, die gleich oder verschieden sind, Reste sind, die ausgewählt sind unter den aliphatischen linearen, gesättigten oder bis zu drei olefinische Bindungen aufweisenden und aus 5 bis 23 Kohlenstoffatomen bestehenden Gruppen Rᵢ.

6. Verfahren nach Anspruch 5, **dadurch gekennzeichnet, daß** in den Triglyceriden der Formel (I) mehr als 60% der Reste R₁, R₂ oder R₃ gesättigte oder einfach ungesättigte Gruppen R; sind.

7. Verfahren nach den Ansprüchen 5 oder 6, **dadurch gekennzeichnet, daß** das natürliche Öl aus Rizinusöl besteht, wobei das Öl aus Triglyceriden der Formel (I), worin die Gruppen Rᵢ einfach ungesättigt sind, besteht.

8. Verfahren nach den Ansprüchen 5 oder 6, **dadurch gekennzeichnet, daß** in den Triglyceriden der Formel (I) mindestens 60% der Gruppen Rᵢ von Oleinsäure abgeleitet sind.

9. Verfahren nach den Ansprüchen 3 bis 7, **dadurch gekennzeichnet, daß** die pflanzlichen Öle Olein-Colzaöl und Olein-Sonnenblumenöl sind.

10. Verfahren nach einem der Ansprüche 3 bis 8, **dadurch gekennzeichnet, daß** das Verdünnungsmittel ausgewählt wird unter den künstlichen Estern aliphatischer, gesättigter oder ungesättigter, linearer oder verzweigter Carbonsäuren, die 6 bis 24 Kohlenstoffatome pro Kette enthalten, und Alkanolen, die 1 bis 4 Kohlenstoffatome pro Kette enthalten.

11. Verfahren nach Anspruch 10, **dadurch gekennzeichnet, daß** die Ester synthetisiert werden durch Veresterung von Carbonsäuren, die durch Hydrolyse von Triglyceriden natürlicher, tierischer oder pflanzlicher Öle erhalten wurden, mittels eines Alkanols, das 1 bis 4 Kohlenstoffatome pro Kette enthält, oder durch direkte Umesterung dieser Triglyceride.

12. Verfahren nach Anspruch 11, **dadurch gekennzeichnet, daß** die für die Synthese der Ester als Ausgangsmaterial gewählten Öle tierische oder pflanzliche Öle oder auch bituminöse Fraktionen sind, die reich an Triglyceriden der Formel, die der Formel (I) des Anspruchs 5 entspricht und mehr als 60% gesättigte oder einfach ungesättigte Reste R₁, R₂ oder R₃ enthält, sind.

13. Verfahren nach den Ansprüchen 11 oder 12, **dadurch gekennzeichnet, daß** die künstlichen Ester ausgehend von pflanzlichen oder tierischen Ölen der Gruppe, die besteht aus Sonnenblumenöl, Kopraöl, Sojaöl, Colzaöl, Rizinusöl, Palmöl, Palmkernöl, Erdnußöl, Leinöl, Olivenöl, Maisöl, Babassuöl, Kokosöl und Talköl, gebildet werden.

14. Verfahren nach einem der Ansprüche 10 bis 13, **dadurch gekennzeichnet, daß** die Alkanole ausgewählt werden aus der Gruppe, die besteht aus Ethanol, Propanol, Butanol, Methanol und Isopropanol.

15. Verfahren nach Anspruch 11, **dadurch gekennzeichnet, daß** das Verdünnungsmittel ausgehend von Ölen, die ausgewählt werden unter Colzaöl, Kopraöl, Sonnenblumenöl, Rizinusöl, und von dem aus Isopropanol bestehenden Alkanol synthetisiert wird.

16. Verfahren nach einem der Ansprüche 1 bis 15, **dadurch gekennzeichnet, daß** der Boden-Schlamm ausgewählt wird aus den inversen Emulsionen, die mit den bis 250°C und darüber stabilen, mineralischen und organischen Ölen erhalten werden, und den ungiftigen Schlämmen, deren Abfälle wegen ihres geringen Volumens zurückgeführt und im Boden gelagert werden können.

17. Verfahren nach Anspruch 3, **dadurch gekennzeichnet, daß** die natürlichen Öle mehr als 95 Gew.-% Triglyceride enthalten.

18. Verfahren nach Anspruch 5, **dadurch gekennzeichnet, daß** in den Triglyceriden der Formel (I) mehr als 80% der Reste R₁, R₂ oder R₃ gesättigte oder einfach ungesättigte Gruppen Rᵢ sind.

19. Verfahren nach Anspruch 8, **dadurch gekennzeichnet, daß** in den Triglyceriden der Formel (I) mehr als 77% der Gruppen Rᵢ von Oleinsäure abgeleitet sind.

20. Verfahren nach Anspruch 12, **dadurch gekennzeichnet, daß** die Triglyceride der Formel (I), die in den für die Synthese der Ester ausgewählten Ölen vorhanden sind, mehr als 80% gesättigte oder einfach ungesättigte Reste R₁, R₂ oder R₃ enthalten.

21. Oberflächen-Schlamm, der bei dem ersten Schritt des Verfahrens nach den Ansprüchen 1 bis 3 verwendbar ist, bestehend aus 5 bis 30 Vol.-% Wasser und 95 bis 70 Vol.-% einer Ölphase, die einen Großteil nicht raffinierte, natürliche, pflanzliche oder tierische Öle enthält, und **dadurch gekennzeichnet, daß** die Ölphase gleichermaßen einen kleineren Teil eines Verdünnungsmittels enthält, das ausgewählt ist unter den künstlichen Estern von gesättigten oder ungesättigten, linearen oder verzweigten, aliphatischen Carbonsäuren, die 6 bis 24 Kohlenstoffatome pro Kette aufweisen, und von Alkanolen, die 1 bis 4 Kohlenstoffatome pro Kette enthalten.

22. Oberflächen-Schlamm nach Anspruch 21, **dadurch gekennzeichnet, daß** die Ester durch Veresterung der Carbonsäuren, die sich aus der Hydrolyse von Triglyceriden natürlicher tierischer oder pflanzlicher Öle ergeben, mittels eines 1 bis 4 Kohlenstoffatome pro Kette enthaltenden Alkanols, oder durch direkte Umesterung der Triglyceride mittels eines derartigen Alkanols synthetisiert werden.
